# EUROPÄISCHE PATENTSCHRIFT

(11) **EP 4 345 327 B1**
(45) Veröffentlichungstag und Bekanntmachung des Hinweises auf die Patenterteilung: **15.10.2025**
(21) Anmeldenummer: 23000132.3
(22) Anmeldetag: 27.09.2023
(51) Int. Cl.: F16C 29/00, B25J 17/02, B25J 19/06

(54) **ACHSAUSGLEICHSMODUL**
AXLE BALANCING MODULE
MODULE D'ÉQUILIBRAGE D'ESSIEU

(30) Priorität: 30.09.2022 DE 202022002157 U
(43) Veröffentlichungstag der Anmeldung: 03.04.2024
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang

(56) Entgegenhaltungen:
- DE-A1- 102016 108 257
- DE-B3- 102013 220 148

## Beschreibung

Die Erfindung betrifft ein Achsausgleichsmodul als Zwischenflanschbaugruppe einer Linearachse mit einem Gehäuse, das eine Deckelgruppe und eine relativ zu dieser mittels eines Federelements belastete Bodengruppe aufweist.

Die DE 10 2013 220 148 B3, die die Merkmale des Oberbegriffs von Anspruch 1 zeigt, offenbart ein mittels eines generativen Verfahren hergestelltes, einteiliges Achsausgleichselement. Bei hohen Betriebsbelastungen besteht die Gefahr der Beschädigung.

Der vorliegenden Erfindung liegt die Problemstellung zugrunde, ein Achsausgleichselement für hohe Momentenbelastungen zu entwickeln.

Diese Problemstellung wird mit den Merkmalen des Hauptanspruches gelöst. Dazu sind die Deckelgruppe und die Bodengruppe relativ zueinander in einer Längsrichtung mittels eines Linearführungssystems geführt. Außerdem weist das Linearführungssystem mindestens drei Lagergruppen mit jeweils zwei Linear-Wälzlagereinheiten auf.

Im unbelasteten Zustand, ohne Einwirken äußerer Kräfte, steht das Achsausgleichsmodul in einer ausgefahrenen Stellung. Das Federelement drückt die Deckelgruppe und die Bodengruppe auseinander. Das Gehäuse begrenzt den Hub in Richtung der ausgefahrenen Stellung.

Bei einer Belastung des Achsausgleichsmoduls werden die Deckelgruppe und die Bodengruppe relativ zueinander in der Längsrichtung bewegt. Die Höhe des Achsausgleichsmoduls in der Längsrichtung wird verkürzt. Hierbei wird das Federelement belastet und ggf. ein druckbelasteter Druckraum komprimiert. Die Widerstandskraft des Achsausgleichsmoduls gegen eine weitere Einfahr-Hubbewegung wird beispielsweise mit zunehmendem Einfahrhub erhöht.

Die Hubbewegung der Bodengruppe relativ zur Deckelgruppe wird mittels eines Linearführungssystems geführt. Dieses Linearführungssystem hat mindestens drei Lagergruppen, wobei jede Lagergruppe mindestens zwei Linear-Wälzlagereinheiten aufweist. Die Linear-Wälzlagereinheiten haben jeweils mehrere käfiggeführte Nadeln oder Rollen als Wälzkörper. Die Wälzkörper wälzen sowohl an der Bodengruppe als auch an der Deckelgruppe ab. Der Käfig ist ein Flachkäfig, der die einzelnen Wälzkörper beabstandet zueinander lagert. Diese Lagerung hat eine hohe wirksame statische und dynamische Tragzahl. Hierdurch wird bei hohen, auf das Achsausgleichsmodul wirkenden Biege- oder Torsionsmomenten die Verformung begrenzt. Das Achsausgleichsmodul ist damit hochbelastbar.

Bei zusätzlichem Einsatz einer Medienbefüllung eines Druckraums des Achsausgleichelements, z.B. mittels Druckluft, kann bei Ausgleichsaufgaben kein oder ein geringer Mediendruck aufgebracht werden. Damit wird ein kraftarmes Einfedern ermöglicht, da im Wesentlichen nur die Gegenkraft des Federelements wirksam ist. Bei einem dynamischen Verfahren der Roboterachsen kann ein hoher Mediendruck aufgebracht werden. Damit wird die Steifigkeit der einzelnen Achse erhöht. Eine auskragende Achse erhält damit eine hohe Stabilität.

Weitere Einzelheiten der Erfindung ergeben sich aus den Unteransprüchen und der nachfolgenden Beschreibung schematisch dargestellter Ausführungsformen.
- Figur 1:: Achsausgleichsmodul;
- Figur 2:: Querschnitt der Figur 1;
- Figur 3:: Bodengruppe;
- Figur 4:: Deckelgruppe mit Linearführungssystem;
- Figur 5:: Kolben.

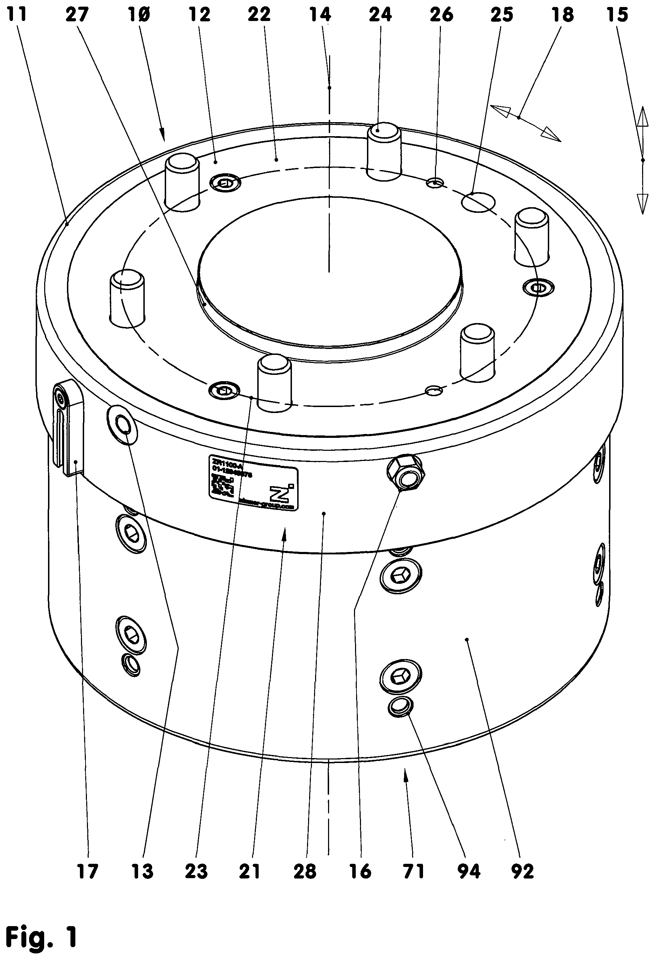

Die Figuren 1 - 5 zeigen ein Achsausgleichsmodul (10) und einige seiner Einzelteile. Derartige Achsausgleichsmodule (10) werden beispielsweise in Linearachsen von Handhabungsgeräten eingesetzt, um Bauteile mit großen Maßtoleranzen oder bei ungenauer Position zu handhaben. Das Achsausgleichsmodul (10) bildet hierbei eine Zwischenflanschbaugruppe (10), die zwischen dem letzten Gelenk des Handhabungsgeräts und beispielsweise einer Greifvorrichtung angeordnet ist.

Das Achsausgleichsmodul (10) hat ein Gehäuse (11). Dieses hat einen an einer Deckelgruppe (21) angeordneten ersten Befestigungsflansch (22) und einen an einer Bodengruppe (71) angeordneten zweiten Befestigungsflansch (72). Die beiden Befestigungsflansche (22, 72) sind beispielsweise kongruent zueinander ausgebildet, sodass z.B. die Greifvorrichtung ohne das Achsausgleichsmodul (10) am Handhabungsgerät befestigt werden kann. Im Ausführungsbeispiel sind die beiden Befestigungsflansche (22, 72) nach ISO 9409-1 gestaltet. Gemäß dieser Norm wird die Nenngröße des jeweiligen Befestigungsflansches (22; 72) nach dem Durchmesser des Teilkreises (23; 73) für seine Befestigungsschrauben (24) bezeichnet. Das in den Figuren dargestellte Achsausgleichsmodul (10) hat die Nenngröße 100. Seine Teilkreise der Befestigungsflansche (22, 72) haben einen Durchmesser von 100 Millimetern. Beispielsweise können geometrisch ähnliche Achsausgleichsmodule (10) gemäß einer geometrischen Reihe, z.B. der dezimalgeometrischen Normalzahlreihe R 10 nach DIN 323, gestaffelt sein.

Auf dem Teilkreis (23) sind an der Deckelgruppe (21) beispielsweise sechs Befestigungsschrauben (24) und eine Zentrierbolzenaufnahme (25) angeordnet. Die Bodengruppe (71) hat auf dem Teilkreis (73) gleichen Durchmessers Gewindebohrungen (74), die z.B. mittels Verschlusseinsätzen (75) verschlossen sind sowie eine hier nicht dargestellte Zylinderbolzenaufnahme.

An der Deckelgruppe (21) ragen die Befestigungsschrauben (24) aus der Stirnseite (12) des Achsausgleichsmoduls (10) heraus. Weiterhin sitzen auf dem Teilkreis (23) beispielsweise drei Zentrierstifte (26), die einen Führungstragring (41) an einem Deckelteil (31) zentrieren. Auf der Stirnseite (12) der Deckelgruppe (21) ist weiterhin ein Zentrierring (27) z.B. zum Zentrieren des Achsausgleichmoduls (10) am Handhabungsgerät ausgebildet.

In der Bodengruppe (71) ist eine Zentrieraufnahme (77) ausgebildet. Dies ist beispielsweise eine Senke, deren Durchmesser 63 % des Durchmessers des Teilkreises (73) beträgt. Die Tiefe der Zentrieraufnahme (77) beträgt z.B. 6 % der Nenngröße des Achsausgleichmoduls (10). In der Zentrieraufnahme (77) sind z.B. sechs Kolbenbefestigungsschrauben (78) auf einem gemeinsamen Teilkreis angeordnet.

Das in den Figuren dargestellte Achsausgleichsmodul (10) hat eine zylinderförmige Hüllkontur. Die Mittellinie (14) ist in der Längsrichtung (15) des Achsausgleichsmoduls (10) orientiert. Der Durchmesser der Deckelgruppe (21) beträgt z.B. das 1,4-fache der Nenngröße. In der Deckelgruppe (21) ist die Bodengruppe (71) aufgenommen, deren Durchmesser z.B. 96 % des Durchmessers der Deckelgruppe (21) beträgt. Die Höhe des ausgefahrenen Achsausgleichselements (10) entspricht z.B. der Nenngröße des Achsausgleichmoduls (10). Es ist auch denkbar, das Achsausgleichsmodul (10) mit einer quaderförmigen Hüllkontur auszubilden.

An der Mantelfläche (28) der Deckelgruppe (21) ist ein Medienanschluss (13) angeordnet. Im Ausführungsbeispiel ist dies ein Pneumatikanschluss (13). Das Achsausgleichmodul (10) kann auch ohne Medienanschluss (13) ausgebildet sein. Weiterhin ist im Ausführungsbeispiel an der Mantelfläche (28) ein Entlüftungsanschluss (16) vorgesehen. Dieser kann ein Sieb aufweisen, um das Eindringen von Verunreinigungen zu verhindern.

Die in der Figur 1 dargestellte Deckelgruppe (21) trägt eine Sensoraufnahme (17) Diese ist an der Mantelfläche (28) der Deckelgruppe (21) angeordnet. In der Sensoraufnahme (17) kann ein wegabhängiger Sensor eingesetzt sein. Dies kann ein Magnetsensor, ein induktiver oder kapazitiver Sensor, etc. sein.

Der Hub des Achsausgleichmoduls (10) in der Längsrichtung (15) beträgt im Ausführungsbeispiel 15 % der Nenngröße. Als Hub des Achsausgleichsmoduls (10) ist die Änderung der in der Längsrichtung (10) orientierten Gesamtlänge bezeichnet, um die die Bodengruppe (71) relativ zur Deckelgruppe (21) verschiebbar ist. Dieser Hub ist größer oder gleich 10 % der Nenngröße des Achsausgleichmoduls (10).

Die in der Längsrichtung (15) orientierte Höhe der Bodengruppe (71) beträgt im Ausführungsbeispiel 70 % der Nenngröße des Achsausgleichselements (10). Die Bodengruppe (71) ist topfförmig ausgebildet. Sie hat ein Bodenteil (81), den Kolben (101) und z.B. sechs Führungsklötze (111) mit Anschlagplatten (112).

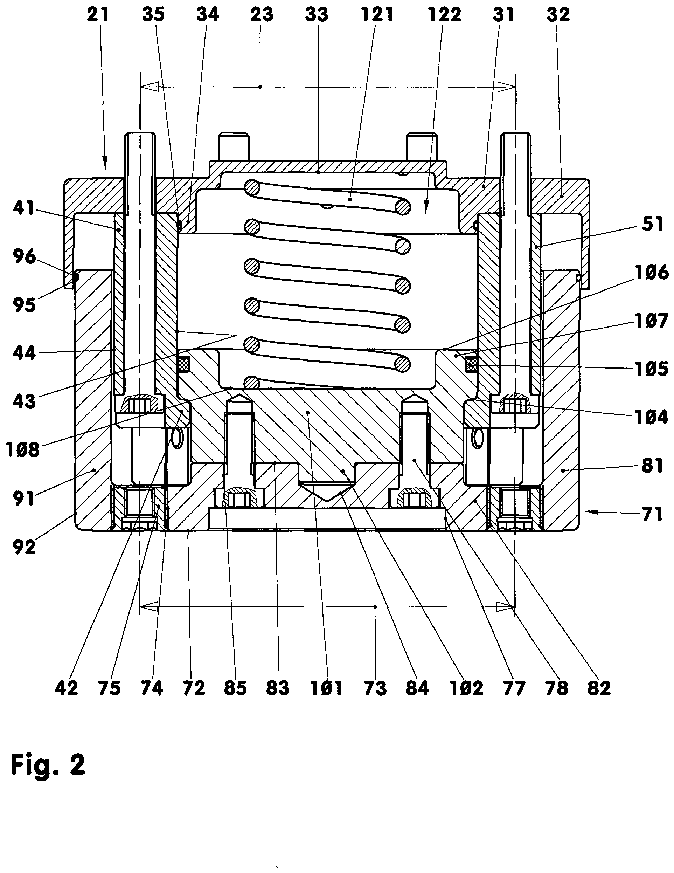

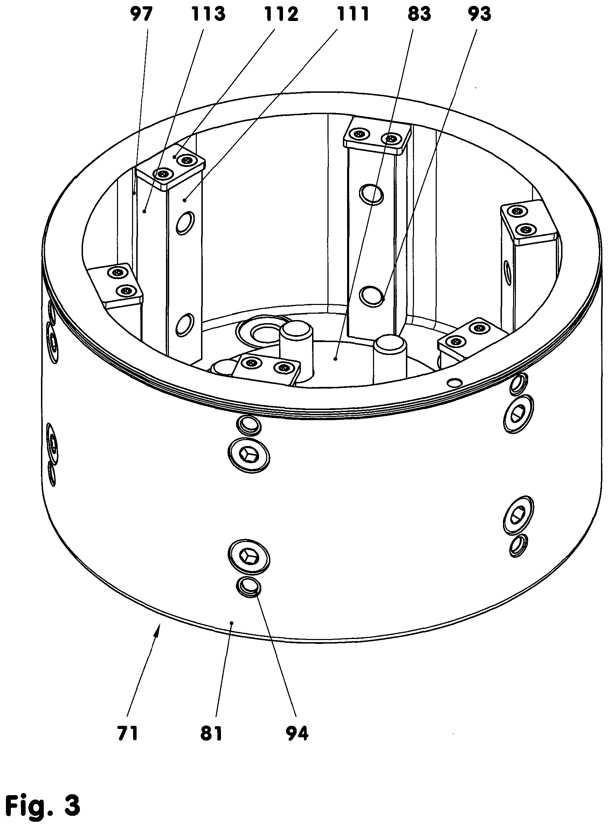

Das Bodenteil (81), vgl. die Figuren 2 und 3, hat einen Boden (82) und eine vom Boden abstehende Wandung (91). Die Dicke des Bodens (82) und der Wandung (91) beträgt jeweils z.B. bis zu 15 % der Nenngröße des Achsausgleichsmoduls (10). Der Boden (82) hat eine ringförmige, plane Auflagefläche (83) mit einer zentralen Zentriereinsenkung (84). In dieser Auflagefläche (83) sind die Durchbrüche (85) für die Kolbenbefestigungsschrauben (78) angeordnet. Die Wandung (91) hat an ihrer Außenseite (92) z.B. 12 Durchgangsbohrungen (93) und Zentrierstiftaufnahmen (94). Beispielsweise ist jeder der Durchgangsbohrungen (93) eine Zentrierstiftaufnahme (94) zugeordnet. Jeweils zwei Durchgangsbohrungen (93) sind in der Längsrichtung (15) versetzt zueinander angeordnet. Die einzelnen Gruppen von Durchgangsbohrungen (93) und Zentrierstiftaufnahmen (94) sind in der Umfangsrichtung (18) gleichmäßig in der Wandung (91) verteilt. Am freien Ende hat die Wandung (91) an ihrer Außenseite (92) eine Ringaufnahme (95). Im zusammengebauten Achsausgleichsmodul (10) liegt in dieser Ringaufnahme (95) ein Dichtring (96).

Die Innenwandung des Bodenteils (81) hat im Bereich der Durchgangsbohrungen (93) Abflachungen (97). An diesen liegt jeweils ein Führungsklotz (111) an. Im Ausführungsbeispiel sind alle Führungsklötze (111) identisch ausgebildet und haben eine quaderförmige Gestalt. Beispielsweise beträgt ihre in der Längsrichtung (15) orientierte Höhe 55 % der Nenngröße. Ihre Breite in einer Tangentialrichtung zur Umfangsrichtung (18) beträgt z.B. 12 % der Nenngröße. Ihre Tiefe parallel zu einer radialen Ebene, in der die Mittellinie (14) liegt, beträgt im Ausführungsbeispiel 11 % der Nenngröße. Die zwei jeweils parallel zur genannten radialen Ebene liegenden Flächen des Führungsklotzes (111) werden im Folgenden Abwälzflächen (113) genannt. Diese Abwälzflächen (113) sind beispielsweise gehärtet ausgebildet und haben z.B. eine Härte zwischen 58 HRC und 64 HRC.

Es ist denkbar, die Führungsklötze (111) prismenförmig auszubilden. Beispielsweise schließen die Abwälzflächen (113) dann in einer Normalenebene zur Längsrichtung (15) miteinander einen Winkel bis zu 120 Grad ein. Der Scheitel dieses Winkels ist in diesem Fall in Richtung der Mittellinie (14) des Achsausgleichsmoduls (10) orientiert.

Auf der obenliegenden Stirnfläche des einzelnen Führungsklotzes (113) ist die Anschlagplatte (112) aufgeschraubt. Die einzelne Anschlagplatte (112) steht über beide Abwälzflächen (113) über. Die Oberseite der Anschlagplatten (112) ist beispielsweise bündig mit dem oberen Rand der Wandung (91).

Auf der Auflagefläche (83) liegt ein Kolben (101) auf. Der Kolben (101) ist dort mittels der Kolbenbefestigungsschrauben (78) befestigt. Seine Unterseite hat eine Zentrierspitze (102), die bei montiertem Achsausgleichsmodul (10) in die Zentriereinsenkung (84) des Bodens (82) ragt.

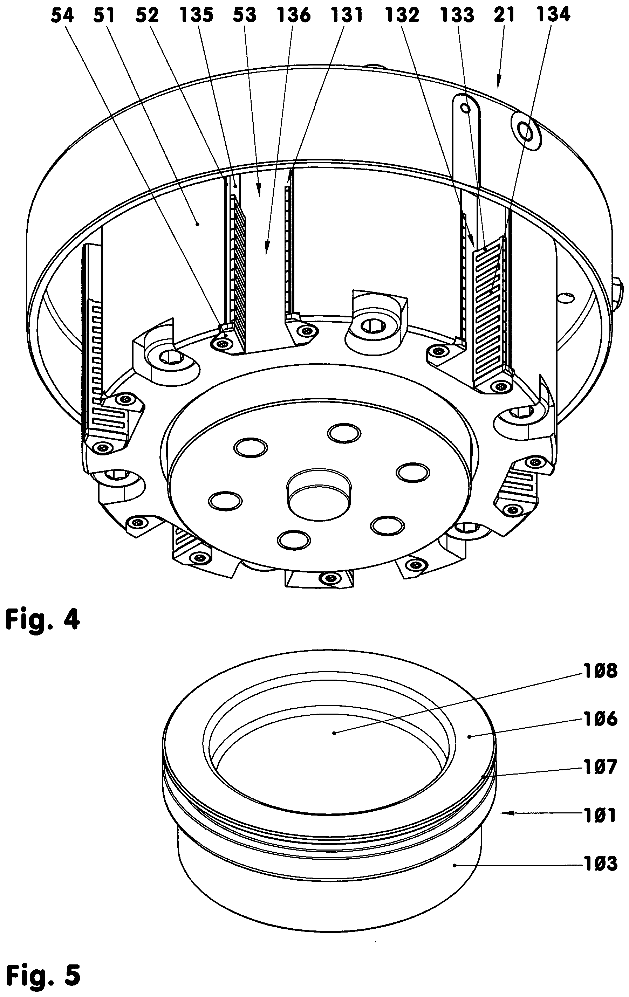

Der Kolben (101), vgl. die Figuren 2 und 5, hat an seiner Kolbenmantelfläche (103) einen Absatz (104). Mit diesem Absatz (104) hintergreift er die Deckelgruppe (21) des Achsausgleichsmoduls (10). Oberhalb des Absatzes (104) trägt der Kolben (101) in der Darstellung der Figur 2 einen Wellendichtring (105), der bei montiertem Achsausgleichsmodul (10) an der Deckelgruppe (21) abdichtend anliegt.

Die Kolbenoberseite (106) hat einen umlaufenden Ring (107), der eine Druck- und Abstützfläche (108) begrenzt. Auf dieser Druck- und Abstützfläche (108) stützt sich in der Darstellung der Figur 2 ein Federelement (121) ab.

Das Federelement (121) ist eine Druckfeder (121), die die Deckelgruppe (21) und die Bodengruppe (71) auseinanderdrückt. Im Ausführungsbeispiel sitzt das Federelement (121) in einem Druckraum (122), der von der Deckelgruppe (21) und der Bodengruppe (71) umschlossen wird. Beispielsweise bildet ein Hubanschlag (42) der Deckelgruppe (21) einen Ausfahranschlag (42) des Achsausgleichsmoduls (10). In der ausgefahrenen Stellung des Achsausgleichsmoduls (10) liegt der Kolben (101) mit seinem Absatz (104) am Ausfahranschlag (42) an.

Der Druckraum (122) ist im Ausführungsbeispiel durch den Medienanschluss (13) hindurch mit einem Mediendruck beaufschlagbar. Der Mediendruck summiert sich zu dem vom Federelement (121) erzeugten Belastung der Deckelgruppe (21) und der Bodengruppe (71), sodass sich bei einer zusätzlichen Mediendruckbelastung die Steifigkeit des Achsausgleichsmoduls (10) erhöht. Bei einer Druckentlastung des Medienanschlusses (13), z.B. beim Umschalten eines vorgeschalteten Wegeventils, wird der Zusatzdruck im Druckraum (122) vermindert. Das Achsausgleichsmodul (10) wird dann nur noch mittels des Federelements (121) belastet. Zusätzlich wird Luft aus dem mittels des Dichtrings (96) begrenzten Raum außerhalb des Druckraums z.B. durch den Entlüftungsanschluss (16) verdrängt.

Die Deckelgruppe (21), vgl. die Figuren 2 und 4, weist das Deckelteil (31) mit einem Deckel (32) und den daran befestigten Führungstragring (41) auf. Die Oberseite des Deckels (32) bildet die oben beschriebene Stirnseite (12) der Deckelgruppe (21). Die Innenseite des Deckels (32) hat eine Federaufnahme (33). Diese begrenzt den Druckraum (122) in der Längsrichtung (15). Sie ist z.B. als kreisflächenförmige Planfläche ausgebildet. Der Deckel (32) hat an seiner Innenseite eine Führungstragringzentrierung (34). Die Führungstragringzentrierung (34) trägt einen Dichtring (35), der beispielsweise am Führungstragring (41) anliegt.

Der Führungstragring (41) hat eine zylindrische Innenwandung (43). Diese ist im unteren Bereich mittels des Ausfahranschlags (42) begrenzt. Die Außenwandung (44) des Führungstragrings (41) hat eine zylindrische Hüllkontur. Diese wird durch z.B. sechs am Umfang gleichmäßig verteilte Stollen (51) vorgegeben.

Jeder Stollen (51) ist in der Umfangsrichtung (18) durch zwei Auflageflächen (52) begrenzt. Die einzelne Auflagefläche (52) hat eine in der Längsrichtung (15) orientierte Höhe von z.B. 55 % der Nenngröße und eine normal hierzu orientierte Breite von beispielsweise 10 % der Nenngröße. Die einzelne Auflagefläche (52) ist als Planfläche (52) ausgebildet.

Jeweils zwei benachbarte Stollen (51) begrenzen mit ihren Auflageflächen (52) eine Führungsausnehmung (53). Bei montiertem Achsausgleichsmodul (10) sitzen jeweils ein Führungsklotz (111), zwei Linear-Wälzlagereinheiten (132) sowie zwei Abwälzbleche (135) in einer Führungsausnehmung (53). Die zwei Linear-Wälzlagereinheiten (132) bilden eine Lagergruppe (136) eines Linearführungssystems (131). Das Linearführungssystem (131) des Achsausgleichsmoduls (10) hat mindestens drei gleichartig aufgebaute Lagergruppen (136). Das in den Figuren dargestellte Achsausgleichsmodul (10) des Ausführungsbeispiels hat sechs Lagergruppen (136) mit jeweils zwei Linear-Wälzlagereinheiten (132).

Die Auflageflächen (52) sind parallel zu den Abwälzflächen (113) der Führungsklötze (111) ausgerichtet. Im Ausführungsbeispiel sind die zueinander orientierten Auflageflächen (52) zweier benachbarter Stollen (51) parallel zueinander. Bei einer nichtparallelen Ausbildung der Abwälzflächen (113) ist der von den Auflageflächen (52) in einer Normalenebene zur Längsrichtung (15) eingeschlossene Winkel entsprechend angepasst.

Die Abwälzbleche (135) sind Blechstreifen mit einer Dicke von bis zu 2 % der Nenngröße. Sie sind z.B. gehärtet und geschliffen ausgebildet. Jeweils ein Abwälzblech (135) überdeckt eine Auflagefläche (52) vollständig. Ein Anschlaghaken (54) und ein Auflagehaken verhindern ein Verschieben der Abwälzbleche (135).

Zwischen jeweils einem Abwälzblech (135) und einer Abwälzfläche (113) sitzt jeweils eine Linear-Wälzlagereinheit (132) des Linearführungssystems (131). Es ist auch denkbar, zusätzlich auf der einzelnen Abwälzfläche (113) ein Abwälzblech (135) anzuordnen. Die einzelne Linear-Wälzlagereinheit (132) weist einen Wälzlagerkäfig (133) in der Bauform eines Flachkäfigs und darin drehbar gelagerte Wälzkörper (134), z.B. in der Bauform von Nadeln (134) auf. Die Länge des Wälzlagerkäfigs (133) beträgt im Ausführungsbeispiel 38 % der Nenngröße. Der Wälzlagerkäfig (133) ist beispielsweise aus einem metallischen Werkstoff, Kunststoff, etc. hergestellt. Er trägt im Ausführungsbeispiel z.B. 12 Nadeln (134), die einreihig parallel zueinander orientiert sind. Die einzelne Nadel (134) hat im dargestellten Ausführungsbeispiel eine Länge von 8 % der Nenngröße und einen Durchmesser von 1,5 % der Nenngröße. Sie besteht z.B. aus dem Werkstoff 100Cr6. Die Nadeln (134) sind ballig ausgebildet und haben beispielsweise eine Gestalt nach DIN 5402 Blatt 3 Form B.

Die einzelne Linear-Wälzlagereinheit (132) hat eine wirksame statische Tragzahl von z.B. 2850 Newton und eine wirksame dynamische Tragzahl von beispielsweise 7350 Newton. Die wirksame statische Tragzahl der einzelnen Linear-Wälzlagereinheit (132) ist damit größer als 2000 Newton, die wirksame dynamische Tragzahl ist größer als 5000 Newton. Bezogen auf die Nenngröße des Achsausgleichsmoduls (10) ist die wirksame statische Tragzahl größer als 20 Newton pro Millimeter und die wirksame dynamische Tragzahl größer als 50 Newton pro Millimeter. Die Linear-Wälzlagereinheit (132) ist fettgeschmiert.

Beim Zusammenbau werden beispielsweise zunächst die Führungsklötze (111) im Bodenteil (81) befestigt. In den Führungstragring (41) wird der Kolben (101) und das Federelement (121) eingesetzt. Das Deckelteil (31) wird auf den Führungstragring (41) aufgesetzt und beispielsweise temporär mittels Muttern auf den Befestigungsschrauben (24) gesichert. Zusammen mit den Linear-Wälzlagereinheiten (132) und den Abwälzblechen (135) wird diese Montageeinheit in das Bodenteil (81) eingesetzt. Der Kolben (101) wird mittels der Kolbenbefestigungsschrauben (78) am Bodenteil (81) fixiert. Für die Montage z.B. am Handhabungsgerät sind nach dem Entfernen der Verschlusseinsätze (75) die Köpfe der Befestigungsschrauben (24) zugänglich. Ein Werkzeug, z.B. eine Greifeinheit, kann an die Bodengruppe (71) angeschraubt werden. Auch eine andere Reihenfolge des Zusammenbaus ist denkbar.

Beim Betrieb steht das Achsausgleichsmodul (10) zunächst in seiner, in den Figuren 1 und 2 dargestellten ausgefahrenen Stellung. Das Federelement (121) und gegebenenfalls im Druckraum (122) anstehender pneumatischer oder hydraulischer Druck stellen diese Stellung sicher.

Beim Auftreffen auf ein z.B. ungenau liegendes Werkstück wird die Bodengruppe (71) in Richtung der Deckelgruppe (21) belastet. Hierbei bildet im Gesamtsystem z.B. die Deckelgruppe (21) ein Festteil und die Bodengruppe (71) ein Losteil. Das Federelement (121) wird komprimiert. Das Volumen des Druckraums (122) wird vermindert. Die Dichtelemente (35, 96, 105) sichern die Bewegungsfugen gegen Druckverlust. Beispielsweise mittels des Wegsensors wird der Hub des Achsausgleichsmoduls (10) erfasst und an die Robotersteuerung übermittelt. Beim wiederholten Einsatz kann diese Information z.B. zum Einlernen der Robotersteuerung eingesetzt werden. Die bei der Hubbewegung des Achsausgleichsmoduls (10) zunehmende Steifheit verhindert eine Beschädigung des Werkzeugs und des Industrieroboters.

Auch Kombinationen der einzelnen Ausführungsbeispiele sind denkbar.

### Bezugszeichenliste:

- 10: Achsausgleichsmodul, Zwischenflanschbaugruppe
- 11: Gehäuse
- 12: Stirnseite
- 13: Medienanschluss, Pneumatikanschluss
- 14: Mittellinie
- 15: Längsrichtung
- 16: Entlüftungsanschluss
- 17: Sensoraufnahme
- 18: Umfangsrichtung

- 21: Deckelgruppe
- 22: erster Befestigungsflansch
- 23: Teilkreis
- 24: Befestigungsschrauben
- 25: Zentrierbolzenaufnahme
- 26: Zentrierstifte
- 27: Zentrierring
- 28: Mantelfläche

- 31: Deckelteil
- 32: Deckel
- 33: Federaufnahme
- 34: Führungstragringzentrierung
- 35: Dichtring, Dichtelement

- 41: Führungstragring
- 42: Hubanschlag, Ausfahranschlag
- 43: Innenwandung von (41)
- 44: Außenwandung von (41)

- 51: Stollen
- 52: Auflageflächen, Planfläche
- 53: Führungsausnehmung
- 54: Anschlaghaken

- 71: Bodengruppe
- 72: zweiter Befestigungsflansch
- 73: Teilkreis
- 74: Gewindebohrungen
- 75: Verschlusseinsätze

- 77: Zentrieraufnahme
- 78: Kolbenbefestigungsschrauben

- 81: Bodenteil
- 82: Boden
- 83: Auflagefläche
- 84: Zentriereinsenkung
- 85: Durchbrüche

- 91: Wandung
- 92: Außenseite
- 93: Durchgangsbohrungen
- 94: Zentrierstiftaufnahmen
- 95: Ringaufnahme
- 96: Dichtring, Dichtelement
- 97: Abflachungen

- 101: Kolben
- 102: Zentrierspitze
- 103: Kolbenmantelfläche
- 104: Absatz
- 105: Wellendichtring, Dichtelement
- 106: Kolbenoberseite
- 107: Ring
- 108: Druck- und Abstützfläche
- 111: Führungsklötze
- 112: Anschlagplatten
- 113: Abwälzflächen

- 121: Federelement, Druckfeder
- 122: Druckraum

- 131: Linearführungssystem
- 132: Lagereinheiten, Linear-Wälzlagereinheiten
- 133: Wälzlagerkäfig, Nadelkäfig
- 134: Wälzkörper, Nadeln

- 135: Abwälzbleche
- 136: Lagergruppen

## Patentansprüche

1. Achsausgleichsmodul (10) als Zwischenflanschbaugruppe einer Linearachse mit einem Gehäuse (11), das eine Deckelgruppe (21) und eine relativ zu dieser mittels eines Federelements (121) belastete Bodengruppe (71) aufweist, **dadurch gekennzeichnet,**
- **dass** die Deckelgruppe (21) und die Bodengruppe (71) relativ zueinander in einer Längsrichtung (15) mittels eines Linearführungssystems (131) geführt sind und
- **dass** das Linearführungssystem (131) mindestens drei Lagergruppen (136) mit jeweils zwei Linear-Wälzlagereinheiten (132) aufweist.

2. Achsausgleichsmodul (10) nach Anspruch 1, **dadurch gekennzeichnet, dass** jede der Linear-Wälzlagereinheiten (132) einen Wälzlagerkäfig (133) mit darin gelagerten zylindrischen Wälzkörpern (134) aufweist.

3. Achsausgleichsmodul (10) nach Anspruch 2, **dadurch gekennzeichnet, dass** die Wälzkörper (134) Nadeln (134) sind.

4. Achsausgleichsmodul (10) nach Anspruch 1, **dadurch gekennzeichnet, dass** die Bodengruppe (71) ein Bodenteil (81) und Führungsklötze (111) mit daran ausgebildeten Abwälzflächen (113) aufweist.

5. Achsausgleichsmodul (10) nach Anspruch 1, **dadurch gekennzeichnet, dass** das Federelement (121). in einem mittels eines Druckmediums beaufschlagbaren Druckraum (122) angeordnet ist.

6. Achsausgleichsmodul (10) nach Anspruch 5, **dadurch gekennzeichnet, dass** der Druckraum (122) mittels eines Kolbens (101) begrenzt ist.

7. Achsausgleichsmodul (10) nach Anspruch 6, **dadurch gekennzeichnet, dass** der Kolben (101) relativ zur Deckelgruppe (21) beweglich ist und an der Bodengruppe (71) befestigt ist.

8. Achsausgleichsmodul (10) nach Anspruch 7, **dadurch gekennzeichnet, dass** die Deckelgruppe (10) einen Hubanschlag (42) für den Kolben (101) bildet.

9. Achsausgleichsmodul (10) nach Anspruch 1, **dadurch gekennzeichnet, dass** die Bodengruppe (71) und die Deckelgruppe (21) zueinander komplementäre Befestigungsflansche (22; 72) des Achsausgleichsmoduls (10) haben.

10. Achsausgleichsmodul (10) nach Anspruch 1, **dadurch gekennzeichnet, dass** sein maximaler Hub mindestens 10 % seiner Nenngröße nach ISO 9409-1 beträgt.

11. Achsausgleichsmodul (10) nach Anspruch 1, **dadurch gekennzeichnet, dass** es einen Wegsensor aufweist.

12. Achsausgleichsmodul (10) nach Anspruch 1, **dadurch gekennzeichnet, dass** die auf seine Nenngröße bezogene wirksame dynamische Tragzahl größer ist als 20 Newton pro Millimeter der Nenngröße.

13. Achsausgleichsmodul (10) nach Anspruch 1, **dadurch gekennzeichnet, dass** das Linearführungssystem (131) mittels eines eine äußere Bewegungsfuge der Deckelgruppe (21) und der Bodengruppe (71) abdichtenden Dichtrings (96) abgedichtet ist.

14. Industrieroboter mit einem Achsausgleichsmodul (10) nach Anspruch 1.

## Claims

1. An axle-balancing module (10) as an intermediate flange assembly of a linear axle having a housing (11), which has a cover group (21) and a base group (71), which is loaded relative to the cover group by means of a spring element (121), **characterised in that**
- the cover group (21) and the base group (71) are guided relative to one another in a longitudinal direction (15) by means of a linear guide system (131), and
- the linear guide system (131) has at least three bearing groups (136), each having two linear rolling bearing units (132).

2. The axle-balancing module (10) according to Claim 1, **characterised in that** each of the linear rolling bearing units (132) has a rolling bearing cage (133) with cylindrical rolling elements (134) mounted therein.

3. The axle-balancing module (10) according to Claim 2, **characterised in that** the rolling elements (134) are needles (134).

4. The axle-balancing module (10) according to Claim 1, **characterised in that** the base group (71) has a base part (81) and guide blocks (111) with rolling faces (113) formed thereon.

5. The axle-balancing module (10) according to Claim 1, **characterised in that** the spring element (121) is arranged in a pressure chamber (122) to which a pressure medium can be applied.

6. The axle-balancing module (10) according to Claim 5, **characterised in that** the pressure chamber (122) is delimited by means of a piston (101).

7. The axle-balancing module (10) according to Claim 6, **characterised in that** the piston (101) is movable relative to the cover group (21) and is fastened to the base group (71).

8. The axle-balancing module (10) according to Claim 7, **characterised in that** the cover group (10) forms a stroke stop (42) for the piston (101).

9. The axle-balancing module (10) according to Claim 1, **characterised in that** the base group (71) and the cover group (21) have mutually complementary fastening flanges (22; 72) of the axle-balancing module (10).

10. The axle-balancing module (10) according to Claim 1, **characterised in that** its maximum stroke is at least 10% of its nominal size as per ISO 9409-1.

11. The axle-balancing module (10) according to Claim 1, **characterised in that** it has a path sensor.

12. The axle-balancing sensor (10) according to Claim 1, **characterised in that** the effective dynamic bearing characteristic number in relation to its nominal size is greater than 20 Newtons per millimetre of the nominal size.

13. The axle-balancing module (10) according to Claim 1, **characterised in that** the linear guide system (131) is sealed by means of a sealing ring (96), which seals an outer movement joint of the cover group (21) and the base group (71).

14. An industrial robot having an axle-balancing module (10) according to Claim 1.

## Revendications

1. Module d'équilibrage des axes (10) conçu en tant qu'ensemble à bride intermédiaire d'un axe linéaire, pourvu d'un carter (11), qui comporte un groupe formant couvercle (21) et un groupe formant fond inférieur (71), contraint par rapport à celui-ci au moyen d'un élément à ressort (121), **caractérisé**
- **en ce que** le groupe formant couvercle (21) et le groupe formant fond inférieur (71) sont guidés l'un par rapport à l'autre dans une direction longitudinale (15) au moyen d'un système de guidage linéaire (131) et
- **en ce que** le système de guidage linéaire (131) comporte au moins trois groupes de roulements (136), dont chacun est doté de deux unités de roulements linéaires (132).

2. Module d'équilibrage des axes (10) selon la revendication 1, **caractérisé en ce que** chacune des unités de roulements linéaires (132) comporte une cage de roulement (133), dotée de corps de roulement (134) cylindriques, logés dans celle-ci.

3. Module d'équilibrage des axes (10) selon la revendication 2, **caractérisé en ce que** les corps de roulement (134) sont des aiguilles (134).

4. Module d'équilibrage des axes (10) selon la revendication 1, **caractérisé en ce que** le groupe formant fond inférieur (71) comporte une partie de fond inférieur (81) et des blocs de guidage (111) dotés de surfaces de roulement (113) conçues sur ceux-ci.

5. Module d'équilibrage des axes (10) selon la revendication 1, **caractérisé en ce que** l'élément à ressort (121) est placé dans un espace sous pression (122) susceptible d'être exposé à un fluide sous pression.

6. Module d'équilibrage des axes (10) selon la revendication 5, **caractérisé en ce que** l'espace sous pression (122) est délimité au moyen d'un piston (101).

7. Module d'équilibrage des axes (10) selon la revendication 6, **caractérisé en ce que** le piston (101) est déplaçable par rapport au groupe formant couvercle (21) et est fixé sur le groupe formant fond inférieur (71).

8. Module d'équilibrage des axes (10) selon la revendication 7, **caractérisé en ce que** le groupe formant couvercle (10) constitue une butée de course (42) pour le piston (101).

9. Module d'équilibrage des axes (10) selon la revendication 1, **caractérisé en ce que** le groupe formant fond inférieur (71) et le groupe formant couvercle (21) possèdent des brides de fixation (22 ; 72) mutuellement complémentaires du module d'équilibrage des axes (10).

10. Module d'équilibrage des axes (10) selon la revendication 1, **caractérisé en ce que** sa course maximale s'élève au moins à 10 % de sa dimension nominale selon la norme ISO 9409-1.

11. Module d'équilibrage des axes (10) selon la revendication 1, **caractérisé en ce qu'**il comporte un capteur de déplacement.

12. Module d'équilibrage des axes (10) selon la revendication 1, **caractérisé en ce que** la charge statique effective rapportée à sa dimension nominale est supérieure à 20 Newtons par millimètre de la dimension nominale.

13. Module d'équilibrage des axes (10) selon la revendication 1, **caractérisé en ce que** le système de guidage linéaire (131) est étanchéifié au moyen d'une bague d'étanchéité (96) assurant l'étanchéité d'un joint de dilatation extérieur du groupe formant couvercle (21) et du groupe formant fond inférieur (71).

14. Robot industriel, doté d'un module d'équilibrage des axes (10) selon la revendication 1.
